# EUROPEAN PATENT SPECIFICATION

(11) **EP 1 681 944 B1**
(45) Date of publication and mention of the grant of the patent: **12.11.2008**
(21) Application number: 05702189.1
(22) Date of filing: 03.01.2005
(51) Int. Cl.: A23L 1/22, B01J 13/02

(54) **PROCESS FOR THE PREPARATION OF AN EDIBLE PRODUCT COMPRISING FLAVOURING MICROCAPSULES**
VERFAHREN ZUR HERSTELLUNG EINES ESSBARES PRODUKT MIT GESCHMACKS-MIKROKAPSELN
PROCEDE DE PREPARATION D'UN PRODUIT COMESTIBLE COMPRENANT DES MICROCAPSULES AROMATISANTES

(30) Priority: 12.01.2004 EP 04100069
(43) Date of publication of application: 26.07.2006
(73) Proprietor: FIRMENICH SA, 1211 Genève 8 (CH)
(72) Inventor: HAHN, Alexander, 276554 Singapore (SG); TROPHARDY, Gil, F-01170 GEX (FR)
(74) Representative: Salvaterra-Garcia, Maria de Lurdes
(86) International application number: PCT/IB2005/000018
(87) International publication number: WO 2005/067733

(56) References cited:
- WO-A-03/041509
- LYNE A: "Encapsulated flavourings - using the yeast cell." FOOD INGREDIENTS AND ANALYSIS INTERNATIONAL 24 (3) 8-9 2002 FLUID TECHNOLOGIES PLC, NEWTON-LE-WILLOWS, UK. TEL. 014925 664200, 2002, XP009030880
- NELSON G ET AL: "Yeast delivery system." FOOD INGREDIENTS AND ANALYSIS INTERNATIONAL SEPT., 13-14 1998, 1998, XP009030829
- DATABASE WPI Section Ch, Week 200376 Derwent Publications Ltd., London, GB; Class B04, AN 2003-809184 XP002280210 & KR 2002 042 297 A (NONG SHIM CO LTD) 5 June 2002 (2002-06-05)

## Description

### Technical Field

The present invention relates to the food industry. It concerns more particularly a process for the preparation of a food product comprising a flavouring delivery system in the form of microbial microcapsules. The process of the invention is characterised by the fact that , an edible composition comprising the flavouring delivery system has been subjected to a thermal treatment at high temperatures.

### Background and Prior Art

Encapsulated systems wherein micro-organisms are used as encapsulating materials for protecting various kind of labile active ingredients have been widely disclosed in the prior art. JP 5-253464, JP 7-289885, JP 8-243378, EP 085805, EP 453316 or EP 242135 describe yeast microcapsules encapsulating various kinds of actives such as fatty acids, phospholipids, long chain hydrophobic liquids, or fragrances and flavours. The known methods for producing microbially encapsulated materials usually comprise mixing a microbe such as fungus, bacterium or alga with a liquid material to be encapsulated and water to form an emulsion, and maintaining a mixing so that the liquid material to be encapsulated is absorbed by diffusion across the microbial cell wall and then retained within the microbe. The systems disclosed are essentially made of a microbial cell and an active substance to be encapsulated. However, it appeared that in the food industry, the organoleptic properties, the stability and the yield of the products flavoured with this type of microbial microcapsules, were not totally satisfying and could thus still be improved.

More recently, WO 03/041509 disclosed microbial microcapsules enclosing an exogenous material, said capsules being described as presenting an improved velocity, strength and sustainment of the release of the exogenous material there-encapsulated. In the described systems, whole or a part of the surface of the micro-organisms (capsules) is coated with at least one kind of material that has been chosen from the group that consists of saccharides, sweeteners with a high sweetness, proteins and polyhydric alcohols. Preferably, the micro-organisms used have been subjected to an elution, i.e. the endogenous intramycelial components have been eluted before encapsulating the exogenous material. The systems described are used in applications that are held in the oral cavity during a long time, in particular in gums such as chewing gums, soft candies and mastication agents. Although other applications than chewing gums are mentioned in a general manner, no examples are given. Furthermore, it is specified in the document that when the microcapsules enclose exogenous materials that are easily negatively influenced by heat, such as flavour components, the capsules have to be added, during processing of edible products, close to the end of the production process, in order to prevent degeneration of the exogenous material by heating. In other words, the document teaches that microbial systems cannot be used in applications wherein they would be subjected to a thermal treatment at high temperatures, as they would degenerate. Accordingly, the examples of preparation of chewing gums described in the application specify that the microbial capsules have been added at the end of the process.

In "Encapsulated flavourings - using the yeast cell", Lyne A., Food Ingredients and Analysis International 24 (3) 8-9 2002, biscuits and cakes comprising cinnamon flavour encapsulated in intact yeast cells are described. Similarly, "Yeast delivery system", Nelson and Bishop, Food Ingredients and Analysis International, Sept, 13-14 1998, also relates to flavours encapsulated in yeasts. However, neither of these publications disclose yeast in combination with a separate carbohydrate material as the encapsulating system.

In XP002280210 and KR2002042297, there is disclosed heat sensitive fragrances encapsulated with yeast and then cyclodextrin. The yeast is not intact.

The present invention thus relates to a process for the preparation of an edible product as set out in claim 1. Preferably, the heat treatment is performed at a temperature of at least 100° or at a temperature higher than 170°C.

Contrary to what could have been expected in view of the prior art teaching, the products prepared according to the process of the invention proved to be particularly appreciated in terms of flavour tonality and flavour impact. In particular, compared with products flavoured with a typical spray-dried flavoured powder, as shown in the examples below, the products prepared according to the process of the invention showed similar or sometimes even better flavouring properties. It therefore appeared that, instead of deteriorating the flavour encapsulated in the microcapsules, the thermal treatment enhances the flavour stability in the final application as demonstrated by the quality of the flavour impact as well as the perception of some tonalities in the final applications. Therefore, the encapsulated system withstands the heat treatment.

The edible product prepared according to the process of the invention results from the processing of an edible composition comprising microcapsules formed of an encapsulated flavour ingredient or composition and an encapsulating material.

The encapsulating material comprises a micro-organism and at least one carbohydrate material. Micro-organisms suitable for the purpose of the invention include yeasts, bacteria or fungi. However, these micro-organisms are given by way of example and are not limiting the invention. The encapsulating material enclosing the active flavour further comprises at least one carbohydrate material. The latter material is added at a late stage of the process of preparation of the microcapsules as described below. The addition of a carbohydrate carrier material in this process allows to retain more flavour ingredient or composition in the delivery system or encapsulated system provided, avoiding the need for a centrifugation step as it was the case in previously described processes such as described in EP 242135.

As regards the carbohydrate material suitable for the purpose of the invention, native starches such as corn, rice, tapioca, potato, wheat and other cereal and polysaccharide sources ; chemically modified starches such as starch ethers, starch esters, crosslinked starches, oxidized starches; physically modified starches such as mechanically damaged, extruded, dextrinised, or pre-gelatinised and thin boiling starches ; or enzymatic and acid hydrolysed starches such as low dextrose equivalent (DE) maltodextrins, maltodextrin with DE below 20 and finally glucose syrup with DE above 20 can be used. Mono, di or polysaccharides may also be used as encapsulating materials for microbial microcapsules. These film former materials are given by way of example but should not be considered as limiting the invention.

It is clear that the carbohydrate material forms, together with the micro-organism, a distinct part of the encapsulating material of the microcapsules
The carbohydrate material has thus to be differentiated from the carbohydrates possibly present in the micro-organism itself, for example the carbohydrates present in the cell wall of the micro-organism. Therefore, according to the process of the present invention, the carbohydrate material is *added* carbohydrate material, which is separate from carbohydrates originating from the micro-organism.

The carrier or encapsulating material is used in a proportion varying between 50 and 95% by weight relative to the total weight of the microcapsule. Preferably, the amount used is comprised between 70 and 90% by weight.

Besides a micro-organism and at least one carbohydrate material, the encapsulating material can contain optional ingredients, the purpose of which is for instance to enhance the retention of the flavour. In particular, proteins can be used in proportions varying between 1 and 5% by weight relative to the total weight of the microcapsule. Examples of proteins suitable for this purpose include gelatine (with high and low bloom), plant proteins and fractions thereof, casein protein, whey protein, whey and corn protein and fraction thereof. Gums constitute another type of additional ingredient that can be added to the encapsulating material forming the microcapsules present in the edible product prepared according to the process of the invention. These gums are used in proportions varying between 0.1 and 2% by weight relative to the total dry weight of the microcapsule and include pectin, xanthan, agar, algae gum (like alginates, carrageenans, Furcellarm and other), gum ghatti, gum traganth, gum guar, cellulose and derivatives thereof, microbial dextran and pullulan. This list of gums is given by way of example and is not limiting the invention.

The encapsulating material above-described encloses a flavour ingredient or composition. The terms "flavour ingredient or composition" as used herein are deemed to define a variety of flavour ingredients or compositions of current use in the food industry, of both natural and synthetic origin. They include single compounds and mixtures. The microcapsules used in the invention can encapsulate volatile or labile ingredients in liquid form, preferably with a log P comprised between -2 and 7. Specific examples of such components may be found in the current literature, e.g. in Fenaroli's Handbook of flavour ingredients, 1975, CRC Press ; Synthetic Food adjuncts, 1947 by M.B. Jacobs, edited by Van Nostrand ; or Perfume and Flavor Chemicals by S. Arctander, 1969, Montclair, New Jersey (USA). These substances are well known to a person skilled in the art of flavouring or aromatising consumer products, i.e. of imparting an odour or a flavour or taste to a consumer product traditionally flavoured, or of modifying the taste of said consumer product. Natural extracts can also be encapsulated into the system flavouring the products of the invention. These include citrus extracts such as lemon, orange, lime, grapefruit, or mandarin oils or coffee, tea, mint, cocoa, vanilla or essential oils of herbs and spices between other.

The proportion of flavour ingredient or composition in the microcapsule is typically comprised between 5 and 50% by weight and preferably between 10 and 30% by weight relative to the total weight of a capsule.

Processes for the preparation of the microcapsules according to the process of the present invention, are described in documents from the prior art such as in EP 242135, in EP 453316 or in EP 085805. These processes all comprise mixing a microbe with a liquid form of the encapsulatable material in the presence of an aqueous medium such that the liquid flavour forms an emulsion in the aqueous medium in order to attain good dispersion and contact of the microbe with the flavour which can be according to some processes dissolved in a lipid-extending substance. The liquid flavour to be encapsulated may be mixed with a washed microbe or an aqueous paste or slurry of the microbe, or the encapsulatable flavour in a small quantity of water, may be mixed with the dry microbe. Only a small quantity of aqueous medium may be employed. In so doing, the liquid flavour diffuses into the micro-organism and will be retained within the cell walls or microbe-capsule of the micro-organism.

Therefore, according to the process of the present invention, the micro-organism has an intact cell-wall and the flavour ingredient is at least partially encapsulated within the intact cell wall. The term "at least partially", in the context of the present invention, refers to the fact that preferably hydrophobic flavours will diffuse and accumulate into the micro-organism. Less hydrophobic or hydrophilic flavours, in contrast, where observed to only partially diffuse into the lumen within the cell-wall of the micro-organism.

In particular embodiments, the elution of intracellular components to the outside of yeast cells may be accomplished as described in EP 453316.

Examples of suitable treatment mixing operations to produce and maintain the aqueous emulsion are low-shear mixing and orbital shaking, for instance at 180 rpm. Prior emulsification of the encapsulatable liquid flavour is not needed.

The treatment may be performed at normal ambient temperature but preferably the temperature is elevated, at least during the initial stage of the treatment, such as during at least the first 30 min, or in order to expedite the treatment. A suitable elevated temperature may be in the range of 35 to 60°.

The treatment is continued for a few hours until encapsulation may be observed microscopically as one or more globules of the materials are inside the microbial cell.

At this stage of the encapsulation process (between about 30 min and 16 hours), at least one carbohydrate material is added to the encapsulation mixture and mixed for about 5 to 30 main until homogeneous. The sample then obtained is subjected to a spray-drying. Advantageously in this embodiment of the encapsulation process, the separation and washing steps necessary in the process described in EP 242135 are no longer useful. The carbohydrate material thus forms a layer around the micro-organism enclosing the flavour ingredient and thus further encapsulates the flavoured ingredient.

The microcapsules prepared as described above have a mean diameter in the range of mean diameter in the range of 5 µm to 2 mm. Preferably, the diameter is in the range of 40µm to 1mm, more preferably 60µm to 500 µm. The term mean refers to the arithmetic mean.

In an embodiment, the microcapsules prepared as described above are used for flavouring edible products in proportions varying from 0.01 to 2.00% depending on the edible product and the organoleptic effect it is desired to achieve.

More particularly, the microcapsules are part of an edible composition which is going to be processed into the edible product. A detailed description of the other ingredients present in the edible composition is not necessary here, as these ingredients are as varied as the nature of the edible products that can be prepared within the framework of the invention. By way of examples, the edible products include applications in high water activity such as soups ; baked products such as crackers, bread, cakes ; high boiled applications such as fresh and dry pasta ; cereal flakes, extruded snacks, fried products such as French fries or fabricated potato chips. A skilled person in the art, namely a food technologist, is able to choose the ingredients required to prepare an edible base flavoured by means of the above-described flavouring system, to be processed into final consumer products.

The edible products have in common the fact that the processing of the corresponding starting edible compositions includes a thermal treatment, at a temperature of at least 70° C, respectively at least 100° C or at least 170° C, and in that the flavouring microcapsules above-described are added to the edible compositions to be processed into these products before said thermal treatment.

Food processing technologies which include a thermal treatment at high temperatures are numerous. The skilled person in the art, knows well all these types of processes. By way of example of such processes, there can be cited a retort processing, including a heat treatment by which an edible composition is subjected to temperatures of 100 to 140°C for a period of 1 s to 20 min (depending on the temperature applied and type of food). A lozenges process is another example of a process suitable for preparing products of the invention. In the latter, sugar and gum solution are mixed. This paste is formed into a dough, cut into pieces. These pieces are tried with hot air in tunnel at 70° C to 190° C for 1 to 60 min. Another example is the preparation of cereal based products such as Corn Flakes^{™} which includes pressure cooked corn grits which are flaked and toasted. On the other hand, extrusion processes for the preparation of extruded snacks, wherein corn grits are extruded at temperatures ranging from 90 to 200° C; or preparation of baked products which are baked at 150 to 240°C air temperature; or preparation of dry pasta wherein wheat flour and egg and additional cereal and protein sources are mixed and then extruded into desired shapes, constitute other examples. These wet pasta products are then dried at 70 to 140°C for 1 to 8 hours.

All these processes are given as examples, but the invention also covers other food processings wherein high temperature conditions are used. All these processes are performed on edible compositions which comprise the microbial microcapsules defined above, contrary to the prior art wherein the capsules had to be added at the end of the processing to avoid the exposure to high temperatures. As shown in the examples below, the edible products proved to be very efficient with regard to the flavour impact and tonalities.

The invention will now be described in a more detailed manner in the following examples wherein the temperatures are indicated in degrees Celsius and the abbreviations have the usual meaning in the art.

### Brief Description of the drawings

Figures 1a) to 1d) show on bar diagrams results of the evaluation of beef flavoured French fries.
Figures 2a) to 2d) show on bar diagrams results of the evaluation of garlic flavoured crackers.
Figures 3a) to 3d) show on bar diagrams results of the evaluation of mixed herbs flavoured fresh pasta.

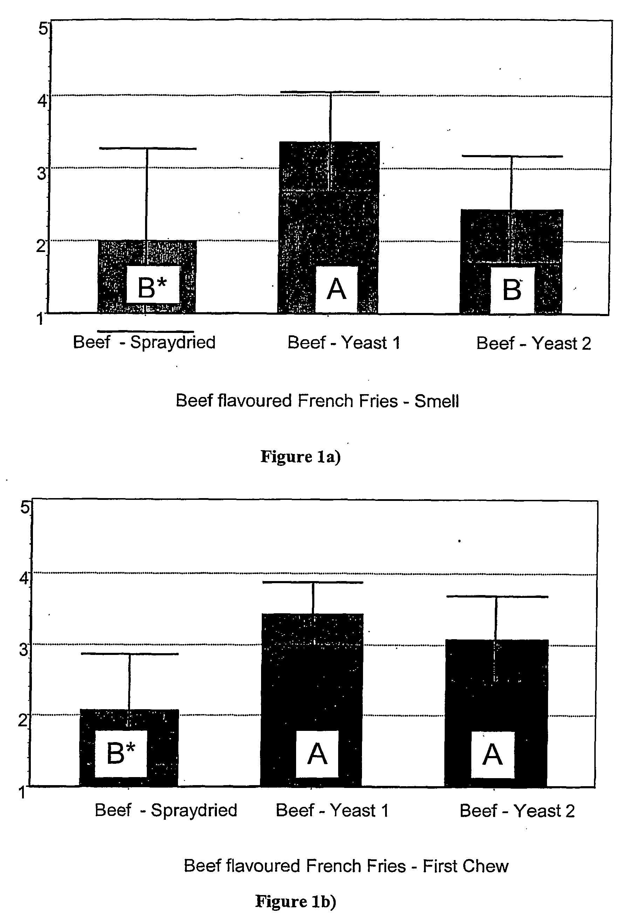

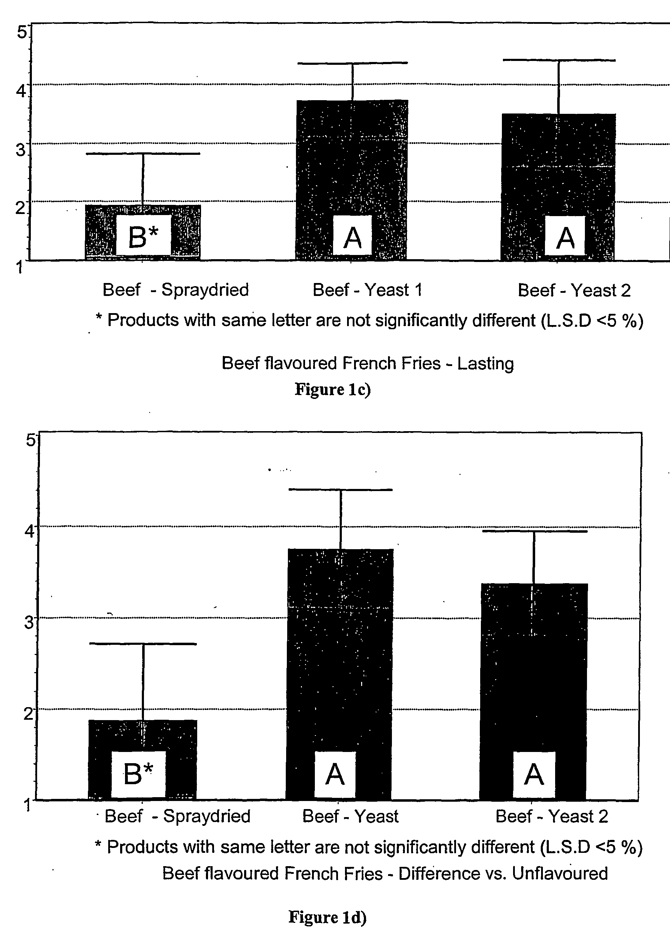

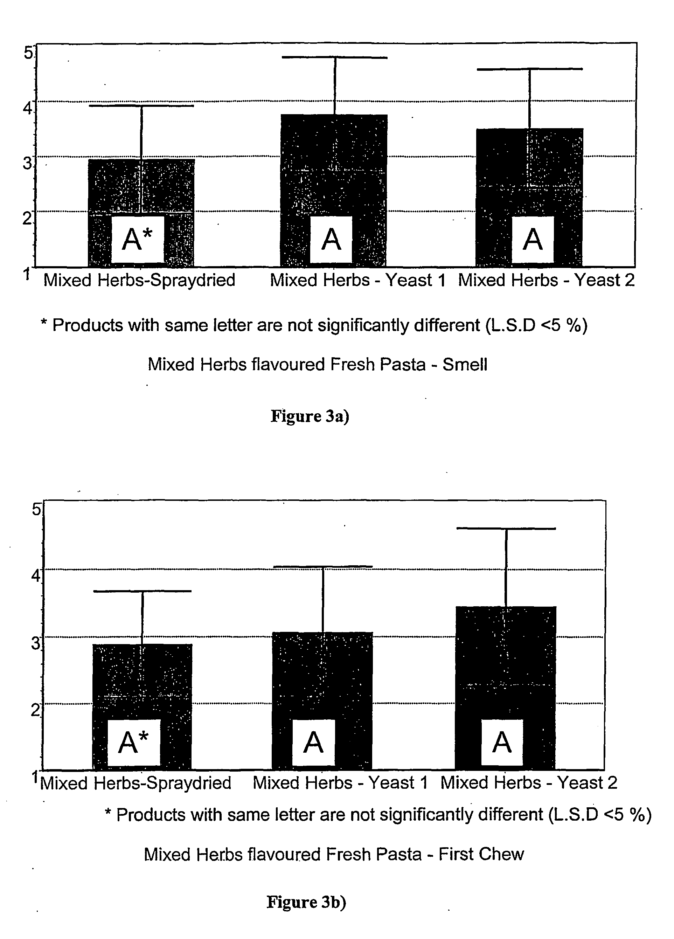

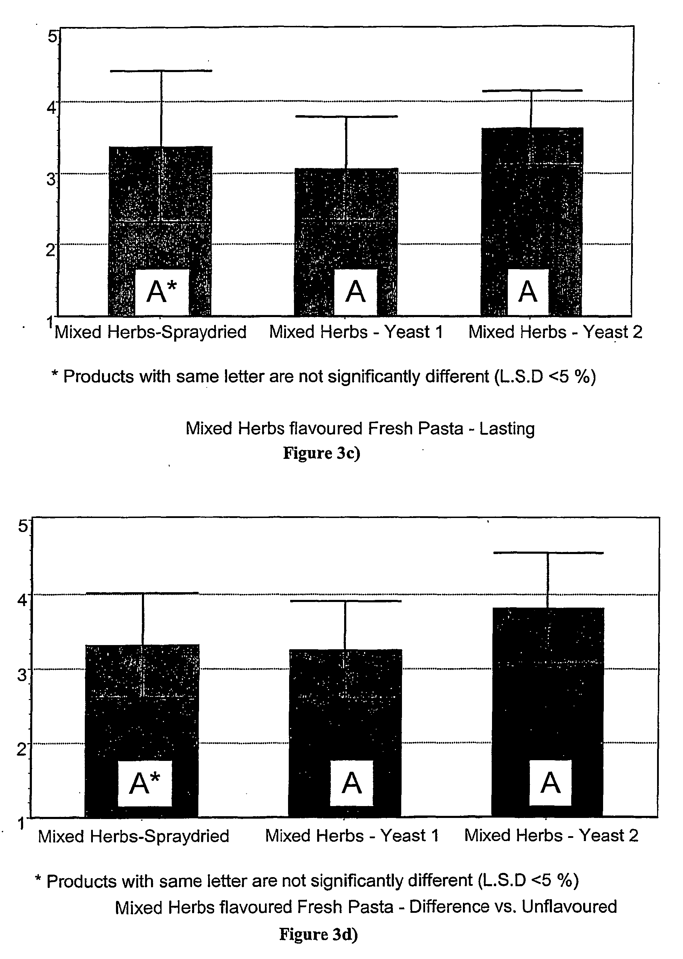

More particularly, Figures 1, 2 and 3 describe the results of a sensorial panel performed over 8 trained panellists who were asked to evaluate, on a blind test, 3 samples for every test namely 2 products prepared according to the process of the present invention (flavoured with various types of microcapsules) and 1 product flavoured with a spray-dried powder. The figures give the results of their evaluations through the following parameters : a) smell ; b) impact after first chew ; c) lasting after swallowing and d) difference with an unflavoured sample. Scores form 1 (weak) to 5 (strong) were given.

### Modes of Carrying out the Invention

### Example 1

### French fries

### Preparation of flavouring delivery systems

### Preparation of delivery systems according to the invention

### Composition

| Ingredients | % dry weight |
|---|---|
| Flavour ¹⁾ | 20 |
| Yeast ²⁾ | 40 |
| Maltodextrin | 40 |
| Total | 100 |

| | |
|---|---|
| 1) beef flavour ref. 505443AH, garlic flavour ref. 905097, mixed herbs flavour ref. 700167.01T ; origin: Firmenich SA, Geneva Switzerland 2) ethanol yeast (referred to as "yeast 1"), baker yeast (referred to as "yeast 2") | |

### Preparation

400 g of yeast solids were hydrated with 2200 g of water. Then 200 g of flavour were added and mixed for 4 hours at 40°. 400 g of maltodextrin were then added to the encapsulation mixture and mixed until homogeneous. The mix was then dried on a Niro Minor wheel atomizer.

### Preparation of a comparative sample

An iso-cost product was used for the comparison, in this case there was chosen a spray-dried powder. In particular, a spray-dried powder was used first to determine a good taste level. Then, the delivery systems as defined in the present invention were dosed accordingly, based on their manufacturing cost.

### Principle

The evaluations were carried out with a panel of 8 people who tested the applications in the form of a blind test. An unflavoured sample was identified and used as a reference. Then eight trained panellists evaluated three samples for every test (first sample is a product flavoured with yeast 1 based microcapsules ; second sample is a product flavoured with yeast 2 based microcapsules ; third sample is a product flavoured with spray-dried powder). They evaluated on a 1 (weak) to 5 (strong) scale, the smell, the impact after first chew, the lasting after swallowing and the difference with the unflavoured sample.

The results have been treated by analysis of variance (ANOVA) and Fisher's least significant difference test (L.S.D) at 5% level of significance (10% in some cases).

### Application in beef flavoured French fries

### French fries formula :

| Ingredients | Parts by weight |
|---|---|
| Water | 60.00 |
| Salt | 1.00 |
| Basic batter | 39.00 |
| Total | 100.00 |

### Dosages:

| **Encapsulation** | **Dosage in wet batter (%)** |
|---|---|
| Spray-dried system (SD) | 1.20 |
| Yeast 1 system | 1.18 |
| Yeast 2 system | 1.21 |

The encapsulated flavours (2 samples of microbial microcapsules and 1 sample of spray-dried powder) enclosing a beef flavour were added to the batter and mixed thereto before blending with water. Mixing was pursued until smooth in a Hobart mixer for 5 minutes at speed 2. The French fries were coated with the obtained batter and parfried at 180° for 60 s in palm oil. Fast freeze was performed. Finally reconstitution was carried out at 180° for 2.5 min in palm oil.

### Results

Figure 1 a), b), c), and d) show in bar diagrams the results of the evaluations made by the panel as regards the intensity of smell (a), impact after first chew (b), lasting after swallowing (c) and difference from unflavoured (d).The products with the same letter are not significantly different.
Figure 1a) shows that one of the products prepared according to the process of the invention provides the highest smell intensity. Figures 1 b), c) and d) show that both systems of the invention are superior as regards all other parameters, to a product flavoured with a spray-dried powder. Hedonic comments show that both systems of the invention are the most appreciated, with the most authentic flavour.

Same products were prepared with other flavour tonalities, in particular garlic, and mixed herbs. Similar results were obtained, especially concerning the long lasting effect which is really stronger in intensity with products flavoured according to process of the invention.

### Example 2

### Crackers

### Principle

Delivery systems (3 samples) were prepared as described in Example 1.
Evaluations were carried out with the same principle as described in Example 1.

### Application in garlic flavoured crackers

### Crackers formula:

### Part 1 : Raising agents

| **Ingredient** | **Quantity (g)** |
|---|---|
| Tricalcium phosphate | 0.25 |
| Sodium bicarbonate | 0.25 |
| Water | 5 |
| Ammonium bicarbonate | 2 |
| Total part 1 | 7.5 |

### Part 2 : Crackers dough

| Ingredient | Quantity (g) |
|---|---|
| Shortening fat | 14 |
| Sugar syrup (65%) | 1 |
| Salt | 1 |
| Malt extract | 2 |
| Wheat flour | 100 |
| Water (hot) | 30 |
| Total part 2 | **148** |

Total in complete dough: 155.5g

### Part 3 : Coating

| Ingredient | **Quantity (g)** |
|---|---|
| Baked crackers | 130 |
| Palm oil | 19.5 |
| Salt | 1.3 |
| Total coating amount | **150.8** |

### Dosages:

| **Encapsulation** | **Dosage (%)** |
|---|---|
| SD | 0.35 |
| Yeast 1 system | 0.32 |
| Yeast 2 system | 0.26 |

Part 1 was blended separately. The melted shortening fat in a Hobbart was blended with part 1 and sugar syrup was added. The flour and other dry ingredients, including the encapsulated flavours were added. Hot water was added and the content was mixed for 5 to 10 min. The dough was put in a plastic bag and rolled it flat. A noodle machine was then used to roll out the dough to 2 mm. The crackers were baked at 210° for 5 min. An oil coating was added in a turning device. The crackers were finally put in an aluminium bag.

### Results

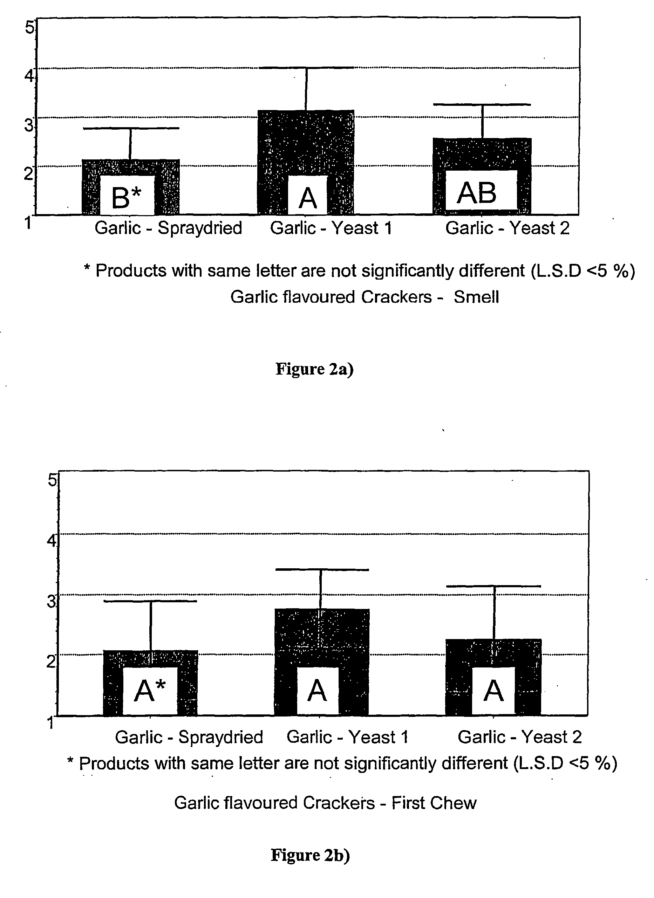

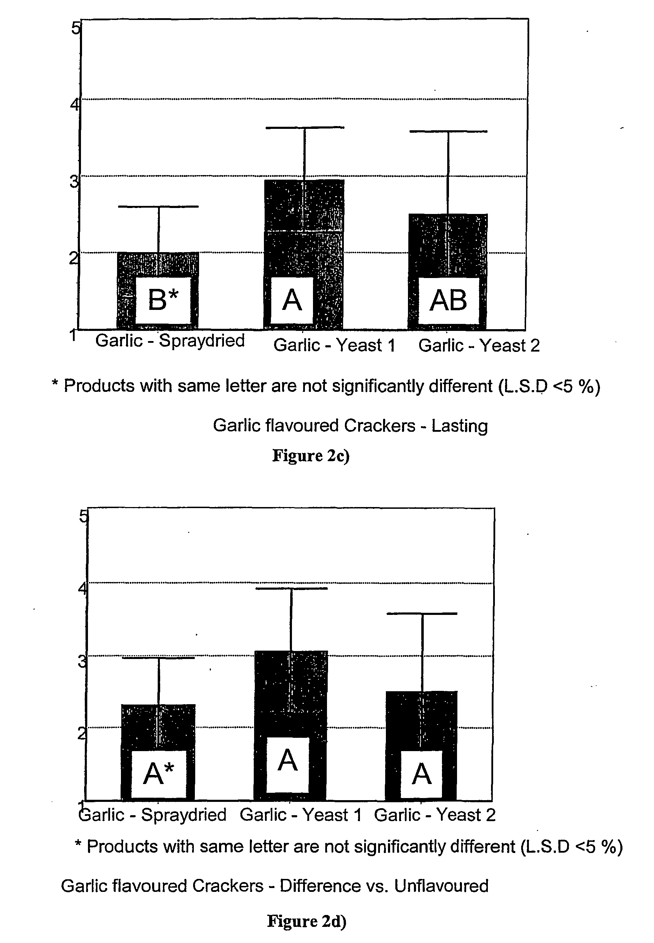

Fig. 2 a), b), c) and d) show the results for garlic flavour in bar diagrams and the results of the evaluations by the panel of the intensity of smell (a), impact after first chew (b), lasting after swallowing (c) and difference from unflavoured (d).The products with the same letter are not significantly different.
The figures show that all samples were not significantly different concerning all parameters. Therefore, products flavoured according to the process of invention perform as well as products flavoured with a spray-dried powder.

Hedonic comments show both products flavoured according to the process of invention have the most authentic flavour, one of them being the most appreciated.

### Example 3

### Fresh Pasta

### Principle

Delivery systems (3 samples) were prepared as described in Example 1.
Evaluations were carried out with the same principle as described in Example, 1.

### Application in mixed herbs flavoured fresh pasta

### Pasta dough:

| Ingredients | Parts by weight |
|---|---|
| Wheat flour 11 % protein | 32.22 |
| Wheat durum | 34.47 |
| Salt | 0.58 |
| Water | 15.79 |
| Egg whole | 16.75 |
| Yeast ¹⁾ | 0.20 |
| Total | 100.00 |

| | |
|---|---|
| 1) gistex ; origin : DSM, Holland | |

### Dosages:

| **Encapsulation** | **Dosage (%)** |
|---|---|
| Spray-dried | 0.50 |
| Yeast 1 system | 0.50 |
| Yeast 2 system | 0.45 |

### Preparation

The wheat durum was mixed with the flour. All ingredients were then added and mixed during 6 min in the Hobart at speed 2. Delivery system containing the flavour was then added and mixed for 1 min until properly dispersed. The dough was left to rest for 30 min. A noodle machine was then used to roll out this dough to 1 mm, which was finally cut into tagliatelles. Pasteurisation was performed in the oven at 75° under full steam for 20 min. The product was packed and then cooked in boiling water for 2 min.

### Results

Figure 5 a), b), c), d) show in bar diagrams the results of the evaluations by the panel of the intensity of smell (a), impact after first chew (b), lasting after swallowing (c) and difference from unflavoured (d).The products with the same letter are not significantly different.

The figures show that all samples are not significantly different concerning all parameters. Therefore, products flavoured according to the process of invention perform as well as products flavoured with a spray-dried powder.

On the other hand, hedonic comments from the panellist outline that one of the products prepared according to the process of the invention is clearly preferred as it was described to have to most authentic mixed herbs flavour.

## Claims

1. A process for the preparation of an edible product comprising flavouring microcapsules formed of an encapsulated flavour ingredient or composition and an encapsulating material comprising a micro-organism having an intact cell wall, a flavour ingredient which is at least partially encapsulated within the intact cell wall and at least one added carbohydrate material which is separate from carbohydrates originating from the micro-organism, wherein the edible composition comprising the microcapsules is subjected during its processing into the edible product, to a thermal treatment at a temperature of at least 70°C and the microcapsules are prepared by
(i) mixing a microbe with the liquid form of the encapsulatable material in the presence of an aqueous medium to form an aqueous emulsion, the mixing being continued until encapsulation of one or more globules of the material inside the microbial cell is observed microscopically,
(ii) adding a carbohydrate material to the encapsulation mixture after 30 minutes to 16 hours of mixing and mixing for 5 to 30 minutes until homogeneous, and
(iii) spray-drying the mixture.

2. A process according to claim 1, **characterised in that** the edible composition is subjected to a thermal treatment at a temperature of at least 100°C.

3. A process according to claim 1, **characterised in that** the edible composition is subjected to a thermal treatment at a temperature of at least 170°C.

4. A process according to claim 1, **characterised in that** the edible product comprises from 0.01 to 2.00% by weight of microcapsules.

5. A process according to claim 1, **characterised in that** the carbohydrate material is selected from the group consisting of starches, hydrolysed starches, mono, di or polysaccharides and yeasts.

6. A process according to claim 1, wherein the edible product is in the form of a fried product, a dough based product, or a dry or fresh pasta.

## Patentansprüche

1. Verfahren für die Herstellung eines eßbaren Produkts, umfassend Geschmacksmikrokapseln, erzeugt aus einem eingekapselten Geschmacksbestandteil oder einer -zusammensetzung und einem einkapselnden Material, umfassend einen Mikroorganismus mit einer intakten Zellwand, einen Geschmacksbestandteil, welcher zumindest teilweise innerhalb der intakten Zellwand eingekapselt wird, und mindestens ein hinzugefügtes Kohlenhydratmaterial, welches von Kohlenhydraten, entstehend aus dem Mikroorganismus, gesondert ist, wobei die eßbare Zusammensetzung, umfassend die Mikrokapseln, während ihrer Verarbeitung zu dem eßbaren Produkt einer thermischen Behandlung bei einer Temperatur von mindestens 70°C unterworfen wird und die Mikrokapseln durch
(i) Mischen einer Mikrobe mit der flüssigen Form des einkapselbaren Materials in Gegenwart eines wässerigen Mediums, um eine wässerige Emulsion zu erzeugen, wobei das Mischen fortgesetzt wird, bis Einkapselung von einem oder mehreren Globuli des Materials im Inneren der mikrobiellen Zelle mikroskopisch beobachtet wird,
(ii) Hinzufügen eines Kohlenhydratmaterials zu dem Einkapselungsgemisch nach 30 Minuten bis 16 Stunden Mischen und Mischen für 5 bis 30 Minuten bis zur Homogenität, und
(iii) Sprühtrocknen des Gemisches
hergestellt werden.

2. Verfahren nach Anspruch 1, **dadurch gekennzeichnet, daß** die eßbare Zusammensetzung einer thermischen Behandlung bei einer Temperatur von mindestens 100°C unterworfen wird.

3. Verfahren nach Anspruch 1, **dadurch gekennzeichnet, daß** die eßbare Zusammensetzung einer thermischen Behandlung bei einer Temperatur von mindestens 170°C unterworfen wird.

4. Verfahren nach Anspruch 1, **dadurch gekennzeichnet, daß** das eßbare Produkt von 0,01 bis 2,00 Gew.-% Mikrokapseln umfaßt.

5. Verfahren nach Anspruch 1, **dadurch gekennzeichnet, daß** das Kohlenhydratmaterial aus der Gruppe, bestehend aus Stärken, hydrolysierten Stärken, Mono-, Di- oder Polysacchariden und Hefen, ausgewählt ist.

6. Verfahren nach Anspruch 1, wobei das eßbare Produkt in der Form von einem gebratenen Produkt, einem auf Teig basierenden Produkt oder einer trockenen oder frischen Pasta ist.

## Revendications

1. Procédé de préparation d'un produit comestible comprenant des microcapsules aromatisantes formées d'un ingrédient ou composition d'arôme encapsulé et d'un matériau d'encapsulation comprenant un micro-organisme ayant une paroi cellulaire intacte, un ingrédient d'arôme qui est au moins partiellement encapsulé dans la paroi cellulaire intacte et au moins une matière glucidique ajoutée qui est distincte des glucides d'origine du micro-organisme, où la composition comestible comprenant les microcapsules est soumise pendant sa transformation en ledit produit comestible, à un traitement thermique à une température d'au moins 70°C et les microcapsules sont préparées par
(i) mélange d'un microbe avec la forme liquide du matériau encapsulable en présence d'un milieu aqueux pour former une émulsion aqueuse, le mélange étant poursuivi jusqu'à ce que l'encapsulation d'un ou plusieurs globules du matériau à l'intérieur de la cellule microbienne soit observée au microscope,
(ii) ajout d'une matière glucidique au mélange d'encapsulation après 30 minutes à 16 heures de mélange et mélange pendant 5 à 30 minutes jusqu'à l'homogénéité, et
(iii) séchage par atomisation du mélange.

2. Procédé selon la revendication 1, **caractérisé en ce que** la composition comestible est soumise à un traitement thermique à une température d'au moins 100°C.

3. Procédé selon la revendication 1, **caractérisé en ce que** la composition comestible est soumise à un traitement thermique à une température d'au moins 170°C.

4. Procédé selon la revendication 1, **caractérisé en ce que** le produit comestible comprend 0,01 à 2,00% en poids de microcapsules.

5. Procédé selon la revendication 1, **caractérisé en ce que** la matière glucidique est choisie dans le groupe constitué des amidons, des amidons hydrolysés, des mono-, di- ou polysaccharides et des levures.

6. Procédé selon la revendication 1, dans lequel le produit comestible se présente sous la forme d'un produit frit, d'un produit à base de pâte, ou de pâtes alimentaires sèches ou fraîches.
